# FASCICULE DE BREVET EUROPEEN

(11) **EP 2 595 797 B1**
(45) Date de publication et mention de la délivrance du brevet: **08.03.2017**
(21) Numéro de dépôt: 11754703.4
(22) Date de dépôt: 19.07.2011
(51) Int. Cl.: B29C 70/30, B29C 53/56, F16C 7/00

(54) **PIECE EN MATERIAU COMPOSITE, SON PROCEDE DE FABRICATION, ET BIELLE OBTENUE PAR CE PROCEDE**
TEIL AUS EINEM VERBUNDSTOFF, HERSTELLUNGSVERFAHREN DAFÜR UND ANHAND DIESES VERFAHRENS HERGESTELLTE PLEUELSTANGE
PART MADE OF A COMPOSITE, ITS MANUFACTURING PROCESS AND CONNECTING ROD OBTAINED BY THIS PROCESS

(30) Priorité: 20.07.2010 FR 1055893
(43) Date de publication de la demande: 29.05.2013
(73) Titulaire: SKF Aerospace France, 26240 Saint Vallier (FR)
(72) Inventeur: VALEMBOIS, Guy, 31650 Lauzerville (FR)
(74) Mandataire: Rhein, Alain
(86) Numéro de dépôt international: PCT/FR2011/051737
(87) Numéro de publication internationale: WO 2012/017164

(56) Documents cités:
- EP-A1- 0 668 446
- DE-C1- 4 139 779
- JP-A- 6 094 024
- US-A- 4 757 681
- US-A- 4 992 313
- US-A- 5 397 272
- US-A1- 2005 056 503
- US-B1- 6 202 505

## Description

La présente invention a trait au domaine des pièces réalisées en matériaux composites, et plus particulièrement des pièces destinées à être assemblées à d'autres, et susceptibles d'être soumises à des efforts en traction et/ou en compression.

La présente invention a ainsi pour objet une telle pièce réalisée en matériau composite destinée à être soumise, au travers d'au moins un point d'attache, à des efforts en traction et/ou en compression, ainsi que le procédé d'obtention de cette pièce.

La présente invention trouve une application particulière dans le domaine de la fabrication des bielles, et a ainsi également pour objet une bielle réalisée selon le procédé selon l'invention.

On sait que le point faible des matériaux composites est la matrice, thermoplastique ou thermodurcissable, dans laquelle sont noyées les fibres de renfort, et qui consiste généralement en une résine, car elle a une résistance spécifique très inférieure à celle des fibres. Le mode de ruine d'une pièce en composite est généralement une rupture de la résine liant les fibres.

Une bonne conception d'une pièce composite prend en compte ce phénomène et privilégie une transmission des efforts par la mise en traction ou en compression pure des fibres ce qui a pour effet de ne pas solliciter la résine. Ainsi, le matériau composite est constitué de couches de fibres orientées dans la direction desdits efforts ou dans des directions proches.

S'il cela est aisément réalisable au niveau de l'essentiel de la pièce lorsque les formes sont simples et la direction des efforts maîtrisée, cela est délicat au niveau des zones de jonction avec une ou plusieurs autres pièces, notamment les zones où s'exerce la traction ou la compression.

De manière générale une telle zone de jonction comporte un insert muni d'un moyen de raccordement permettant de réaliser la liaison et la transmission des efforts dans la pièce, mais la mise en place de tels inserts est particulièrement délicate, notamment lorsque les efforts sont destinés à changer de direction lors de l'utilisation de ladite pièce composite.

Le principal inconvénient est donc localisé au niveau de la jonction du corps de la pièce composite avec l'insert, et concerne la transmission de l'effort de l'un à l'autre.

On connaît ainsi par le document WO 2008/066606 une bielle comprenant un corps tubulaire en matériau composite, à chacune des extrémités duquel est solidarisé un insert métallique au travers de joints à double cisaillement à liaison mutuelle.

On connaît aussi par le document US 4 992 313, une bielle constituée de l'enroulement de fibres sur un mandrin comprenant les inserts destinés à constituer les oeilletons.

On connaît également par le document FR 2 152 289, un organe de transmission de forces, de type bielle, réalisé en une matière synthétique renforcée de fibres. Cet organe comprend un corps central tubulaire renfermant des fibres orientées selon le sens dans lequel s'exercent les forces, et dont les extrémités sont rétrécies en forme de tronc de cône pour permettre la solidarisation à chacune d'un moyen de raccordement, laquelle est constituée de deux parties, l'une interne et l'autre externe, en sorte de pouvoir enserrer la partie rétrécie de l'extrémité du corps central tubulaire.

Cependant, cet organe de transmission de forces ne remédie que partiellement aux problèmes de jonction du corps de la pièce composite avec l'insert, et il demeure des problèmes de résistance et de tenue dans le temps.

On connaît également des pièces composites dans lesquelles l'insert comportant le moyen de raccordement est noyé dans le matériau composite dont est fait le corps. De telles pièces composites ne permettent de résoudre le problème de jonction que partiellement, car il demeure des problèmes de discontinuité de la résistance aux efforts de traction et/ou de compression.

On connaît également par le document US2005/056503 une bielle constituée de fibres de renfort orientées et noyées dans une matrice, enroulées sur un mandrin, ainsi qu'un insert réalisé par enroulement de fibres, et destiné à constituer un oeilleton de ladite bielle, en étant encastré dans un trou pratiqué dans l'extrémité de celle-ci. Une telle bielle ne peut en aucun être soumise à des efforts en traction et/ou en compression, d'autant plus lorsque la direction des efforts est destinée à varier.

On connaît également par le document US 6,202,505 une bielle constituée de fibres de renfort orientées et noyées dans une matrice, enroulées sur un mandrin et comportant à son extrémité des points d'attache sous forme de méplats usinés et perforés.

La présente invention a pour but de proposer une pièce en matériau composite destinée à être soumise, au travers d'au moins un point d'attache, à des efforts en traction et/ou en compression, même lorsque la direction desdits efforts est destinée à varier, qui permet de remédier aux divers inconvénients précités.

La pièce en matériau composite destinée à être soumise, au travers d'au moins un point d'attache et en coopération avec un moyen de connexion, à des efforts en traction et/ou en compression, se caractérise essentiellement en ce qu'elle consiste en une pièce monolithique constituée d'un enroulement de fibres de renfort orientées et noyées dans une matrice, et qui comporte un corps de forme tubulaire tandis que ledit point d'attache, disposé à une extrémité dudit corps de forme tubulaire, se présente sous la forme d'une sangle formant une boucle tournant autour d'un axe perpendiculaire à l'axe dudit corps de forme tubulaire, la paroi intérieure et/ou la paroi extérieure de ladite boucle étant conformée pour coopérer avec une partie dudit moyen de connexion en traction et/ou en compression selon une ou plusieurs directions.

Selon une caractéristique additionnelle de la pièce en matériau composite selon l'invention, la sangle présente deux faces extérieures planes perpendiculaires à l'axe de la boucle.

Selon une autre caractéristique additionnelle de la pièce en matériau composite selon l'invention, la paroi extérieure de la boucle est convexe et présente une forme de partie de cylindre, de manière à constituer une face d'appui apte à coopérer avec une partie du moyen de connexion de forme complémentaire, pour un travail en compression selon une ou plusieurs directions.

Selon une autre caractéristique additionnelle de la pièce en matériau composite selon l'invention, la paroi extérieure de la boucle est convexe et présente une forme de partie de sphère, de manière à constituer une face d'appui apte à coopérer avec une partie du moyen de connexion de forme complémentaire, pour un travail en compression selon une ou plusieurs directions.

Selon une autre caractéristique additionnelle de la pièce en matériau composite selon l'invention, la paroi intérieure de la boucle est concave et présente une forme de partie de cylindre de manière à constituer une face d'appui apte à coopérer avec une partie du moyen de connexion de forme complémentaire, pour un travail en traction selon une ou plusieurs directions.

Selon une autre caractéristique additionnelle de la pièce en matériau composite selon l'invention, la paroi intérieure de la boucle est concave et présente une forme de partie de sphère, de manière à constituer une face d'appui apte à coopérer avec une partie du moyen de connexion de forme complémentaire, pour un travail en traction selon une ou plusieurs directions.

Les parois intérieure et extérieure de la boucle sont de profil cylindrique et/ou sphérique, et sont concentriques. De préférence lorsque l'une est de profil cylindrique, l'autre l'est aussi, mais il est possible que l'une soit de profil sphérique tandis que l'autre est de profil cylindrique.

La présente invention a également pour objet un procédé de fabrication d'une pièce réalisée en matériau composite destinée à être soumise, au travers d'au moins un point d'attache, à des efforts en traction et/ou en compression, ledit matériau composite venant soit de l'enroulement de fibres de renfort pré-imprégnées d'une résine thermodurcissable ou thermoplastique, soit de l'enroulement de fibres de renfort, imprégnées après l'opération d'enroulement d'une résine thermodurcissable ou thermoplastique, lequel procédé se caractérise en ce qu'il consiste :
- à préparer un mandrin comprenant un corps allongé, prolongé axialement, à au moins l'une de ses extrémités, d'une partie distale dont l'extrémité présente une zone médiane convexe courbe bordée de deux flasques,
- à enrouler les fibres de renfort sur ledit mandrin, en passant alternativement d'une part hélicoïdalement sur ledit corps selon un pas déterminé, et d'autre part sur ladite zone médiane entre lesdits flasques,
- à soumettre l'ensemble à des conditions de polymérisation adaptées à la résine thermodurcissable ou thermoplastique utilisée.

Selon une caractéristique additionnelle du procédé selon l'invention, la zone médiane du mandrin présente un profil de portion de sphère de manière à donner à la paroi intérieure de la partie moulée sur cette zone une forme de portion de sphère, et en ce que, après polymérisation, on usine la paroi extérieure de ladite partie moulée pour lui donner une forme de portion de sphère, qui est concentrique à la portion de sphère de ladite paroi intérieure.

Le procédé selon l'invention tel que décrit précédemment permet de fabriquer des bielles en matériau composite.

Les avantages et les caractéristiques de la pièce composite selon l'invention, ainsi que de son procédé de fabrication, ressortiront plus clairement de la description qui suit et qui se rapporte au dessin annexé, lequel en représente plusieurs modes de réalisation non limitatifs.

Dans le dessin annexé :
- la figure 1 représente une vue schématique en perspective d'une pièce composite, ou partie de pièce composite, selon l'invention.
- la figure 2 représente une vue schématique en perspective d'un mandrin destiné à la mise en oeuvre du procédé de réalisation de la même pièce composite.
- la figure 3 représente une vue schématique en perspective et en coupe longitudinale du même mandrin.
- la figure 4 représente une vue schématique en perspective du même mandrin lors d'une phase du procédé.
- les figures 5a et 5b représentent des vues schématiques en perspective partielle de la pièce composite, ou partie de pièce composite, de la figure 1 en cours d'utilisation.
- les figures 6a et 6b représentent des vues schématiques en perspective partielle de la pièce composite, ou partie de pièce composite, de la figure 2 dans une autre utilisation.
- la figure 7 représente une vue schématique en perspective et en coupe partielle d'une partie d'une variante la pièce composite selon l'invention.
- la figure 8 représente une vue schématique partielle en perspective et en éclaté de la même variante en cours d'utilisation.

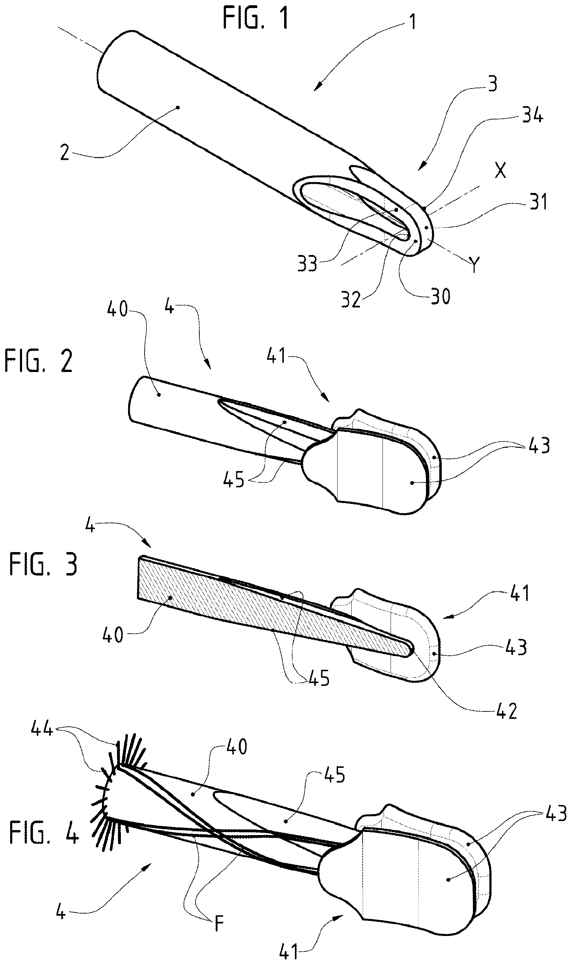

En référence à la figure 1, on peut voir une pièce composite 1, ou une partie de pièce composite, selon l'invention, qui peut consister en une extrémité d'une bielle, sachant que l'autre extrémité, non représentée, peut être de conception identique, tout en étant éventuellement de formes, de dimensions et d'orientation différentes.

Cette pièce composite 1 est monolithique, elle comprend un corps tubulaire 2 d'axe longitudinal Y, prolongé en extrémité d'une sangle 3 qui forme une boucle 30 tournant à 180° autour d'un axe X perpendiculaire à l'axe Y.

Le corps tubulaire 2 est, non limitativement, de forme cylindrique, tandis que la boucle 30 présente une paroi extérieure 31 convexe en forme de partie de cylindre, une paroi intérieure 32 concave en forme de partie cylindre et coaxiale à la paroi extérieure 31, ainsi que deux parois latérales planes 33 et 34, perpendiculaires à l'axe X.

Le procédé de réalisation de la pièce composite 1 est illustré sur les figures 2, 3 et 4. On peut ainsi voir sur les figures 2 et 3 un mandrin 4 utilisé dans ce procédé.

Le mandrin 4 comprend un corps allongé 40, en l'occurrence de forme cylindrique, prolongé d'une partie distale 41 dont l'extrémité comprend une zone médiane 42, visible partiellement sur la figure 3, de forme convexe en forme de partie de cylindre, bordée latéralement de deux flasques 43.

Sur la figure 4, on peut voir que le procédé de fabrication d'une pièce composite 1 selon l'invention comporte une étape qui consiste à enrouler des fibres de renforts F sur le mandrin 4, cet enroulement étant réalisé en passant alternativement sur le corps 40 puis sur la zone médiane 42 entre les deux flasques 43. L'enroulement sur le corps 40 est réalisé hélicoïdalement, selon un pas prédéterminé.

On notera que sur la figure 4, les fibres F sont maintenues et distribuées angulairement au moyen de guides radiaux 44.

Dans le cas de la fabrication d'une pièce composite telle qu'une bielle, comprenant une sangle 3 à chacune des extrémités du corps tubulaire 2, le mandrin 4 comporte deux extrémités distales 41 munies chacune de flasques 43 et est dépourvu de guides radiaux 44, et l'enroulement des fibres F est réalisé en passant alternativement d'une extrémité distale 41 à l'autre, en les enroulant hélicoïdalement sur le corps 40 selon le pas souhaité.

On notera également que lors de l'enroulement la concentration des fibres de renfort F est bien plus importante au niveau de la zone médiane 42 qu'au niveau du corps 40, c'est-à-dire que l'épaisseur de la sangle 3 est supérieure à celle la paroi du corps tubulaire 2, aussi, afin que la pièce composite 1 présente au niveau de la sangle des dimensions extérieures analogues à celles du corps tubulaire 2, la partie distale 41 du mandrin 4 va en rétrécissant, notamment au travers de deux biseaux 45 tangents à la zone médiane 42, comme cela est plus particulièrement visible sur la figure 3.

Le procédé consiste ensuite, après enroulement des fibres, à imprégner l'ensemble d'une résine thermodurcissable ou thermoplastique, puis à soumettre l'ensemble à des conditions de polymérisation adaptées.

On notera qu'il également possible d'utiliser des fibres F pré-imprégnées de résine.

Bien entendu, le mandrin 4 est conçu pour pouvoir être retiré après polymérisation, il peut ainsi être, non limitativement, démontable ou réalisé dans un matériau fusible.

Ainsi, la pièce composite 1, ainsi qu'une bielle faite selon le même procédé, est monobloc, et les fibres de renforts qu'elle comporte, sont orientées de manière optimale pour supporter des efforts en traction ou en compression.

Le corps tubulaire 2 est de section ronde, mais il peut parfaitement être d'une section de forme différente, ovale, hexagonale, voire carrée. Les fibres F contenues dans la sangle 3 s'étendent essentiellement, du moins dans ses portions rectilignes, dans la direction de l'axe principal de la pièce composite 1, ou dans une direction proche de cet axe.

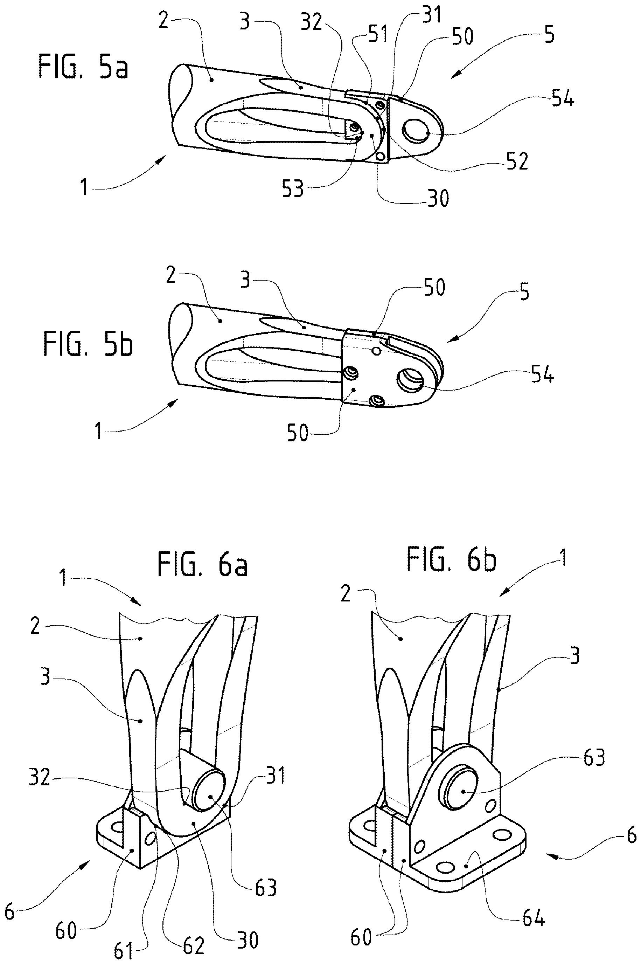

En référence maintenant aux figures 5a et 5b, on peut voir un mode d'utilisation d'une pièce composite 1. Dans ce mode d'utilisation la pièce composite est utilisée en coopération avec un connecteur 5, en métal par exemple, destiné à être assujetti à la sangle 3.

Ce connecteur 5 est constitué du rapprochement de deux demi-coques 50 autour de boucle 30 de la sangle 3. Chacune des demi-coques 50 comporte un logement 51 qui présente la forme en creux de la moitié, dans le sens longitudinal, de l'extrémité de la sangle 3, à savoir une paroi extérieure concave 52 et une paroi intérieure convexe 53, symétriques aux parois respectivement 31 et 32 de la boucle 30. Les parois 52 et 53 sont hémi-circulaires, éventuelle prolongées d'une partie tangente.

Après assemblage des deux demi-coques 50, le connecteur 5 est parfaitement adapté à la sangle 3, et immobilisé sur celle-ci. Le connecteur 5 est muni d'un oeil 54 permettant la fixation à un organe, non représenté.

Une traction axiale, exercée entre la pièce composite 1 et le connecteur 5 au travers de l'oeil 54, se traduit pas une traction axiale pure des fibres F dans les portions rectilignes, et une compression pure de la matrice dans les zones courbes en contact à savoir entre les parois 32 et 53, en sorte qu'il n'y a pas de risque de détérioration de la matrice, et de délaminage des fibres.

Il en est de même dans le cas d'une compression axiale dans les portions rectilignes de la sangle 3 la compression est réalisée au niveau des fibres F, tandis que dans les zones courbes en contact, c'est-à-dire entre les parois 31 et 52, la compression est réalisée au niveau de la matrice.

En référence maintenant aux figures 6a et 6b, on peut voir un autre mode d'utilisation d'une pièce composite 1, où celle-ci est utilisée en coopération avec un connecteur 6, en métal par exemple, destiné à être assujetti à la sangle 3, et consistant en une sorte de chape.

Le connecteur 6 est constitué du rapprochement de deux demi-coques 60 autour de boucle 30 de la sangle 3. Chacune des demi-coques 60 comporte un logement 61 qui présente approximativement la forme en creux de la moitié, dans le sens longitudinal, de l'extrémité de la sangle 3. Ce logement 61 est délimité d'un côté par une paroi extérieure concave 62, et de l'autre côté par un pivot cylindrique 63, fixe ou mobile en pivotement axial.

Le pivot cylindrique 63 est de rayon égal à celui de la paroi interne concave 32 de la boucle 30, tandis que la paroi extérieure concave 62 est circulaire de rayon égal à celui de la paroi extérieure convexe 31, mais s'étendant sur un secteur angulaire inférieur à 180°.

On comprendra qu'après assemblage des deux demi-coques 60, la sangle 3 est maintenue étroitement dans le connecteur 6, avec toutefois un degré de liberté en pivotement autour de l'axe du pivot cylindrique 63, et selon la valeur du secteur angulaire couvert par le segment circulaire de la paroi extérieure concave 62.

On notera par ailleurs que le connecteur 6 comporte, du côté opposé à celui comportant le pivot 63, une platine 64 destinée à permettre sa solidarisation à un support, en sorte que le connecteur 6 puisse être parfaitement adapté à l'exercice d'un effort en traction et/ou en compression sur la pièce composite 1.

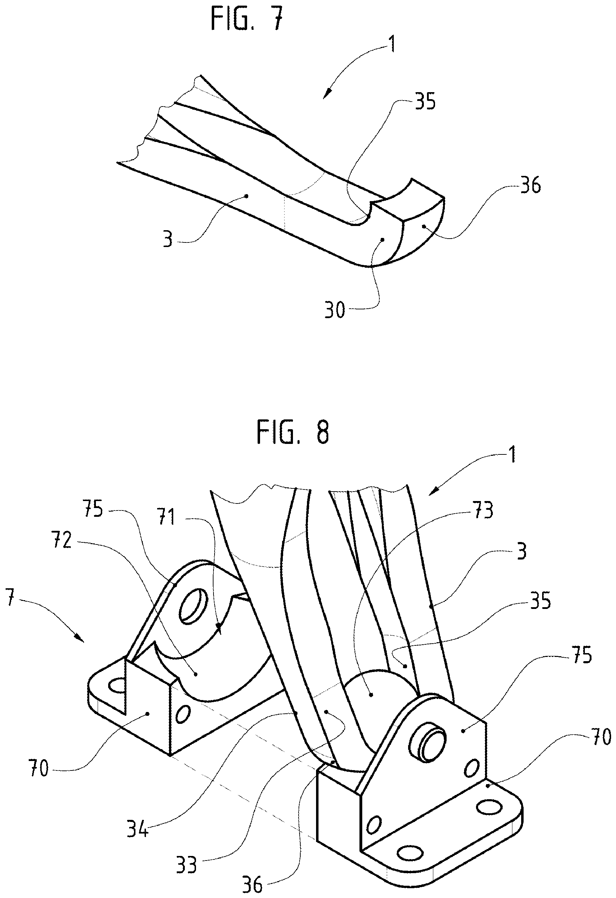

En référence maintenant à la figure 7, on peut voir une variante de la pièce composite 1, dont la boucle 30, représentée partiellement, comporte une paroi interne 35 concave de profil en portion de sphère, et une paroi externe convexe 36 également de profil en portion de sphère, les parois 35 et 36 étant concentriques.

Du point de vue réalisation, en ce qui concerne la paroi interne concave 35, elle résulte d'une forme particulière du mandrin 4 et plus particulièrement de la zone médiane 42, tandis qu'en ce qui concerne la paroi extérieure convexe 36, elle est réalisée par usinage.

En référence à la figure 8 on peut voir une pièce composite 1 présentant une telle variante, associée à un connecteur 7 constitué du rapprochement de deux demi-coques 70 autour de boucle 30 de la sangle 3, et consistant en une sorte de chape.

Chacune des demi-coques 70 comporte un logement 71 qui présente approximativement la forme en creux de la moitié, dans le sens longitudinal, de l'extrémité de la sangle 3. Ce logement 71 est délimité d'un côté par une paroi extérieure concave 72 en portion de sphère de rayon égal à celui de la portion sphérique de la paroi extérieure convexe 36, et de l'autre côté par un pivot sphérique 73 de rayon égal à celui de la portion sphérique de la paroi interne 35 concave.

On notera que chacune des demi-coques 70 comporte un flasque 75 destiné à porter le pivot sphérique 73, et qu'après constitution du connecteur 7 par rapprochement des demi-coques 70, la distance qui sépare les deux flasques 75 est supérieure à l'épaisseur de la sangle 3, c'est-à-dire à la distance qui sépare les deux parois latérales planes 33 et 34, en sorte d'autoriser plusieurs degrés de liberté, notamment trois.

Cette configuration permet de former une rotule, apte à supporter des efforts en traction et en compression, tout en mettant une oeuvre un nombre limité d'éléments.

On notera que si la distance qui sépare les deux flasques 75 est égale à l'épaisseur de la sangle 3, on obtient une configuration équivalente à celle obtenu avec le connecteur 6, c'est-à-dire à un degré de liberté.

La présente invention permet de concevoir une bielle monobloc qui présente un corps dont la forme tubulaire offre une grande résistance tout en étant allégé, tandis que les points d'attaches dont sont pourvues ses extrémités, sont dans la parfaite continuité dudit corps, présentent des fibres de renfort orientées de manière optimale, et peuvent être configurées pour des applications particulières, en vue d'être soumises à des efforts en traction et/ou en compression, même lorsque la direction desdits efforts est destinée à varier, éventuellement en cours de sollicitation.

## Revendications

1. Pièce en matériau composite destinée à être soumise, au niveau des zones de jonction avec une ou plusieurs autres pièces, au travers d'au moins un point d'attache et en coopération avec un moyen de connexion (6; 7), à des efforts en traction et/ou en compression, **caractérisée en ce qu'**elle consiste en une pièce monolithique (1) constituée d'un enroulement de fibres de renfort orientées et noyées dans une matrice, et qui comporte un corps (2) de forme tubulaire tandis que ledit point d'attache, disposé à une extrémité dudit corps (2) de forme tubulaire, se présente sous la forme d'une sangle (3) formant une boucle (30) tournant autour d'un axe (X) perpendiculaire à l'axe (X) dudit corps (2) de forme tubulaire, la paroi intérieure (32; 35) de forme tubulaire, la paroi intérieure (32; 35) présente une forme de partie de cylindre ou de partie de sphère pour constituer une face d'appui pour un travail en traction, tandis que la paroi extérieure (31; 36) de ladite boucle présente une forme de partie de cylindre ou de partie de sphère pour constituer une face d'appui pour un travail en compression, en coopération avec une partie (63; 73, 62; 72) dudit moyen de connexion (6; 7) en traction et/ou en compression selon une ou plusieurs directions.

2. Pièce en matériau composite selon la revendication 1, **caractérisée en ce que** la sangle (3) présente deux faces extérieures (33, 34) planes perpendiculaires à l'axe (X) de la boucle (30).

3. Pièce en matériau composite selon la revendication 1 ou la revendication 2, **caractérisée en ce que** les parois intérieure (32; 35) et extérieure (31; 36) de la boucle (30) sont de profil cylindrique et/ou sphérique, et sont concentriques.

4. Procédé de fabrication d'une pièce (1) réalisée en matériau composite destinée à être soumise, au travers d'au moins un point d'attache, à des efforts en traction et/ou en compression, ledit matériau composite venant soit de l'enroulement de fibres de renfort pré-imprégnées d'une résine thermodurcissable ou thermoplastique, soit de l'enroulement de fibres de renfort, imprégnées après l'opération d'enroulement d'une résine thermodurcissable ou thermoplastique, **caractérisé en ce qu'**il consiste :
- à préparer un mandrin (4) comprenant un corps allongé (40), prolongé axialement, à au moins l'une de ses extrémités, d'une partie distale (41) dont l'extrémité présente une zone médiane (42) convexe courbe bordée de deux flasques (43), et qui va en rétrécissant, au travers de deux biseaux (45) tangents à ladite zone médiane (42),
- à enrouler les fibres de renfort (F) sur ledit mandrin (4), en passant alternativement d'une part hélicoïdalement sur ledit corps (40) selon un pas déterminé, et d'autre part sur ladite zone médiane (42) entre lesdits flasques (43),
- à soumettre l'ensemble à des conditions de polymérisation adaptées à la résine thermodurcissable ou thermoplastique utilisée.

5. Procédé selon la revendication 4, **caractérisé en ce que** la zone médiane (42) du mandrin (4) présente un profil de portion de sphère de manière à donner à la paroi intérieure (35) de la partie moulée (30) sur cette zone une forme de portion de sphère, et **en ce que**, après polymérisation, on usine la paroi extérieure (36) de ladite partie moulée (30) pour lui donner une forme de portion de sphère, qui est concentrique à la portion de sphère de ladite paroi intérieure (35).

6. Bielle en matériau composite, comportant deux points d'attache reliés par un corps en matériau composite, **caractérisée en ce qu'**elle obtenue par le procédé selon l'une quelconque des revendications 4 à 5.

## Patentansprüche

1. Teil aus Verbundstoff, das bestimmt ist, im Bereich der Verbindungszonen mit einem oder mehreren anderen Teilen durch mindestens einen Befestigungspunkt und in Zusammenarbeit mit einen Verbindungsmittel (6; 7) Zug- und/oder Kompressionskräften ausgesetzt zu sein, **dadurch gekennzeichnet, dass** es aus einem monolithischen Teil (1) besteht, gebildet aus einer Wicklung von ausgerichteten und in eine Matrix getauchten Verstärkungsfasern, und das einen rohrförmigen Körper (2) aufweist, wogegen der Befestigungspunkt, der an einem Ende des rohrförmigen Körpers (2) angeordnet ist, die Form eines Gurts (3) hat, der eine Schlaufe (30) bildet, die um eine zur Achse (X) des rohrförmigen Körpers (2) senkrechte Achse (X) dreht, die rohrförmige Innenwand (32; 35), wobei die Innenwand (32; 35) eine Form eines Zylinderteils oder Kugelteils aufweist, um eine Stützfläche für eine Zugarbeit zu bilden, wogegen die Außenwand (31; 36) der Schlaufe eine Form eines Zylinderteils oder Kugelteils aufweist, um eine Stützfläche für eine Kompressionsarbeit zu bilden, in Zusammenarbeit mit einen Teil (63; 73, 62; 72) des Zug- und/oder Kompressions-Verbindungsmittels (6; 7) gemäß einer oder mehreren Richtungen.

2. Teil aus Verbundstoff nach Anspruch 1, **dadurch gekennzeichnet, dass** der Gurt (3) zwei ebene, zur Achse (X) der Schlaufe (30) senkrechte Außenflächen (33, 34) aufweist.

3. Teil aus Verbundstoff nach Anspruch 1 oder Anspruch 2, **dadurch gekennzeichnet, dass** die Innenwand (32; 35) und die Außenwand (31; 36) der Schlaufe (30) ein zylindrisches und/oder kugeliges Profil haben und konzentrisch sind.

4. Herstellungsverfahren eines aus Verbundstoff hergestellten Teils (1), das bestimmt ist, durch mindestens einen Befestigungspunkt Zug- und/oder Kompressionskräften ausgesetzt zu sein, wobei der Verbundstoff entweder aus der Wicklung von mit einem duroplastischen oder thermoplastischen Harz getränkten Verstärkungsfasern oder aus der Wicklung von Verstärkungsfasern, die nach dem Wickelvorgang mit einem duroplastischen oder thermoplastischen Harz getränkt werden, herrührt, **dadurch gekennzeichnet, dass** es besteht aus:
- Vorbereiten einer Hülse (4), umfassend einen länglichen Körper (40), der an mindestens einem seiner Enden von einem distalen Teil (41) verlängert ist, dessen Ende eine gekrümmte konvexe Mittelzone (42), die von zwei Wangen (43) gesäumt ist, aufweist und der sich durch zwei zur Mittelzone (42) tangentiale Schrägen (45) reduziert,
- Wickeln der Verstärkungsfasern (F) auf die Hülse (4), alternativ zum einen schraubenförmig gemäß einer bestimmten Steigung über den Körper (40) und zum anderen über die Mittelzone (42) zwischen den Wangen (43) führend,
- Aussetzen der Einheit Polymerisationsbedingungen, die für das verwendete duroplastische oder thermoplastische Harz geeignet sind.

5. Verfahren nach Anspruch 4, **dadurch gekennzeichnet, dass** die Mittelzone (42) der Hülse (4) ein Kugelabschnittsprofil aufweist, so dass der Innenwand (35) des auf dieser Zone geformten Teils (30) eine Kugelabschnittsform verliehen wird und dass nach Polymerisation die Außenwand (36) des geformten Teils (30) bearbeitet wird, um ihm eine Kugelabschnittsform zu verleihen, die zum Kugelabschnitt der Innenwand (35) konzentrisch ist.

6. Pleuelstange aus Verbundstoff, aufweisend zwei Befestigungspunkte, die von einem Körper aus Verbundstoff verbunden sind, **dadurch gekennzeichnet, dass** sie mittels des Verfahrens nach einem der Ansprüche 4 bis 5 hergestellt ist.

## Claims

1. A part made from a composite material intended to be subjected, at junction zones with one or several other parts, through at least one fastening point and in cooperation with a connecting means (6; 7), to traction and/or compression forces, **characterized in that** it consists of a monolithic part (1) made up of wound reinforcing fibers oriented and embedded in a matrix, and which includes a tubular body (2), while said fastening point, arranged at one end of said tubular body (2), assumes the form of a strap (3) forming a loop (30) rotating around an axis (X) perpendicular to the axis (X) of said tubular body (2), the tubular inner wall (32; 35), the inner wall (32; 35) has a cylinder or sphere portion shape to form a bearing face for traction work, while the outer wall (31; 36) of the loop has a cylinder or sphere portion shape to form a bearing face for compression work, in cooperation with a part (63; 73, 62; 72) of said connecting means (6; 7) in traction and/or compression in one or several directions.

2. The part made from a composite material according to claim 1, **characterized in that** the strap (3) has two planar outer faces (33, 34) perpendicular to the axis (X) of the loop (30).

3. The part made from a composite material according to claim 1 or claim 2, **characterized in that** the inner (32; 35) and outer (31; 36) walls of the loop (30) have a cylindrical and/or spherical profile, and are concentric.

4. A method for manufacturing a part (1) made from a composite material intended to be subjected, through at least one fastening point, to traction and/or compression forces, said composite material either coming from the winding of preimpregnated reinforcing fibers of a thermosetting or thermoplastic resin, or from the winding of reinforcing fibers, impregnated after the winding operation with a thermosetting or thermoplastic resin, **characterized in that** it consists of:
- preparing a mandrel (4) comprising an elongated body (40), extended axially, at least at one of its ends, by a distal part (41) whereof the end has a curved convex median zone (42) bordered by two flanges (43), and which narrows, through two bevels (45) that are tangent to said median zone (42),
- winding the reinforcing fibers (F) on said mandrel (4), alternating between helical winding on said body (40) with a predetermined pitch on the one hand, and on said median zone (42) between said flanges (43) on the other hand,
- subjecting the assembly to polymerization conditions suitable for the thermosetting or thermoplastic resin used.

5. The method according to claim 4, **characterized in that** the median zone (42) of the mandrel (4) has a sphere portion profile so as to give the inner wall (35) of the molded part (30) in this zone a sphere portion shape, and **in that**, after polymerization, the outer wall (36) of said molded part (30) is machined to give it a sphere portion shape, which is concentric to the sphere portion of said inner wall (35).

6. A connecting rod made from a composite material, including two fastening points connected by a body made from a composite material, **characterized in that** it [is] obtained using the method according to any one of claims 4 to 5.
